# EUROPÄISCHE PATENTSCHRIFT

(11) **EP 2 585 397 B1**
(45) Veröffentlichungstag und Bekanntmachung des Hinweises auf die Patenterteilung: **14.05.2014**
(21) Anmeldenummer: 11754366.0
(22) Anmeldetag: 05.09.2011
(51) Int. Cl.: B66C 7/02, B66C 7/14, E01B 25/24

(54) **ANORDNUNG ZUM VERBINDEN ZWEIER SCHIENENABSCHNITTE**
ARRANGEMENT FOR CONNECTING TWO RAIL SEGMENTS
ARRANGEMENT POUR RELIER DEUX PORTIONS DE RAIL

(30) Priorität: 14.09.2010 DE 102010037523
(43) Veröffentlichungstag der Anmeldung: 01.05.2013
(73) Patentinhaber: Demag Cranes & Components GmbH, 58300 Wetter (DE)
(72) Erfinder: SPIES, Gerd, 58313 Herdecke (DE); PASSMANN, Christoph, 44287 Dortmund (DE)
(74) Vertreter: Moser & Götze
(86) Internationale Anmeldenummer: PCT/EP2011/065336
(87) Internationale Veröffentlichungsnummer: WO 2012/034895

(56) Entgegenhaltungen:
- DE-A1- 3 326 103
- DE-A1- 4 109 051
- DE-B- 1 249 301
- DE-U1- 9 310 593
- JP-A- 2000 042 759
- US-A1- 2002 079 347
- US-A1- 2010 096 438

## Beschreibung

Die Erfindung betrifft eine Anordnung aus zwei Schienenabschnitten aus mindestens einem an jedem Schienenabschnitt angeordneten Halteelement und aus mindestens einem mit den Halteelementen in Kontakt stehenden Verbindungsmittel, über das die Schienenabschnitte stirnseitig miteinander verbindbar sind, wobei jedes Halteelement über eine Schweißnaht an dem jeweiligen Schienenabschnitt befestigt ist.

Selbsttragende rohrförmige Laufschienen für Hängebahnen, Hängekrane u. dgl. sind bekannt, die im Querschnitt beispielsweise aus zwei symmetrisch zur vertikalen Längsmittelebene angeordneten dünnwandigen Profilen zusammengesetzt sind. Die Laufschiene bildet einen Fahrweg für die Hängebahnen, wozu mehrere Laufschienenabschnitte an Ihren Schienenenden auf Stoß verbunden werden. An den Schienenenden sind dazu Hülsen befestigt, die in Schienenlängsrichtung verlaufende, die Laufschienenabschnitte miteinander verbindende Schraubenbolzen aufnehmen. Die Hülsen sind über ihre Längserstreckung außen an die Schienen angeschweißt. Aus dem deutschen Patent DE 1 249 301, dem deutschen Gebrauchsmuster DE 93 10 593 U1 und der deutschen Offenlegungsschrift DE 41 09 051 A1 sind entsprechende Verbindungen bekannt.

Des Weiteren ist aus der deutschen Offenlegungsschrift DE 33 26 103 A1 bekannt, I-förmige Schienen über entsprechende Hülsen miteinander zu verbinden. Dort sind die Hülsen an einer Unterseite eines Unterflansches der I-förmigen Schiene angeschweißt. Die Schweißnaht zwischen der Unterseite der Schiene und der jeweiligen Hülse verläuft hierbei im Wesentlichen rechteckförmig entlang der Längsseiten und der Stirnseiten der jeweiligen Hülse.

Diese Art der Stoßverbindung hat sich im Gegensatz zu Manschetten (DE 299 03 470 U1) oder vielteiligen Verbindungsanordnungen (DE 103 37 121 B3 oder DE 10 2006 058 422 A1) bewährt, weil sie einfach und effektiv ist sowie den Fahrweg nicht beeinträchtigt.

Allerdings besteht nach wie vor der Wunsch nach einer Verbindung, die bei dynamischer Belastung hohe Biegemomente übertragen und insgesamt hohe Belastungen trägt, da hiervon maßgeblich die Gesamttragfähigkeit abhängt.

Daher besteht die Aufgabe der vorliegenden Erfindung darin, eine hinsichtlich der dynamischen Belastung verbesserte Verbindungsanordnung von Schienenabschnitten bereitzustellen.

Diese Aufgabe wird durch die in Anspruch 1 wiedergegebene Anordnung gelöst. Vorteilhafte Ausgestaltungen der Erfindung sind in den Unteransprüchen 2 bis 11 angegeben.

Erfindungsgemäß wird bei einer Anordnung aus zwei Schienenabschnitten, aus mindestens einem an jedem Schienenabschnitt angeordneten Halteelement und aus mindestens einem mit den Halteelementen in Kontakt stehenden Verbindungsmittel, über das die Schienenabschnitte stirnseitig miteinander verbindbar sind, wobei jedes Halteelement über eine Schweißnaht an dem jeweiligen Schienenabschnitt befestigt ist, eine hinsichtlich der dynamischen Belastung verbesserte Verbindungsanordnung von Schienenabschnitten dadurch erreicht, dass mindestens ein Ende der Schweißnaht in einem Bereich außerhalb des Halteelements auf dem Schienenabschnitt endet. Dadurch, dass ein Ende der zumindest einen Schweißnaht aus dem Bereich der Schweißfuge zwischen dem Halteelement und dem Schienenabschnitt hinausläuft, wird die Auslaufkerbe der Schweißnaht durch das Weiterziehen der Schweißnaht außerhalb des kritischen Bereichs der Schweißfuge angeordnet. Hierdurch wird eine Spannungserhöhung durch Geometriesprung sowie eine örtliche Trennung der Auslaufkerbe von der Schweißfuge erreicht, so dass letztendlich das Halteelement höher belastet werden kann. Dies erlaubt auch insgesamt eine höhere Belastung der gesamten Verbindung.

Vorteilhafter Weise ist vorgesehen, dass die Schweißnaht im Bereich des Halteelements in Längsrichtung des Schienenabschnitts verläuft und das Ende der Schweißnaht von der Längsrichtung abweicht. Wichtig ist hierbei, dass die Schweißnaht weitergeführt wird und dies unter einem Winkel linear oder bogenförmig.

Dabei ist es von Vorteil, wenn die Länge des Endes 10 bis 30 mm, vorzugsweise 15 bis 25 mm, besonders bevorzugt 20 mm, beträgt. Somit ist ein ausreichender Abstand zu dem Halteelements gewahrt und die Auslaufkerbe der Schweißnaht befinde sich nicht mehr im Bereich des Halteelements und somit im Bereich der Schweißfuge zwischen Halteelement und Schienenabschnitt.

Vorzugsweise ist das Ende der Schweißnaht von der Stirnseite des Schienenabschnitts abgewandt. Somit kann das Halteelement und daher auch die Schweißnaht bis an die Stirnseite selbst heran positioniert werden.

Besonders bevorzugt ist, dass das Ende linear ist und weicht in einem Winkel von der Längsrichtung des Schienenabschnitts ab und der Winkel 15 - 45 Grad, vorzugsweise 25 - 35, besonders bevorzugt 30 Grad beträgt.

Es ebenfalls möglich, beidseitig des Haltelements eine entsprechende Schweißnaht vorzusehen, wenn also jeweils eine in Längsrichtung des Schienenabschnitts verlaufende Schweißnaht auf jeder der beiden Längsseites des Halteelements angeordnet ist. Hierbei können die beiden Schweißnähte je Halteelement unterschiedliche Längen, Winkel und Längen der Enden aufweisen.

Üblicherweise sind die Schienenabschnitte Profilschienen, wobei es sich anbietet, dass die Schienenabschnitte Hohlprofilschienen sind, die aus zwei symmetrisch zur vertikalen Längsmittelebene angeordneten Profilen zusammengesetzt sind. Dann ist es sinnvoll, wenn die Haltelemente an den Außenseiten der Hohlprofilschienen angeordnet sind, so dass der Innenraum als Laufbahn beispielsweise für Laufwagen, oder Schleifleitungen frei bleibt.

Oft weisen solche Schienen zur Versteifung in Längsrichtung verlaufende Winkelräume oder Nuten aus, so dass es sich anbietet, die Halteelemente in längs verlaufenden Winkelräumen bzw. Nuten der Schienenabschnitte anzuordnen. Somit stehen sie nicht über den von der Schiene beanspruchten Raum nach außen hervor.

Eine besonders hohe Belastung der Verbindungsanordnung ist möglich, wenn das Ende der Schweißnaht sich aus dem Winkelraum bzw. Nut bis auf das flache Profil des Schienenabschnitts erstreckt. Das abweichende Ende der Schweißnaht wird also aus der Nut heraus und um die Kante herum auf einen benachbarten flachen Bereich des Schienenabschnitts geführt.

In vorteilhafter Weise ist vorgesehen, dass die Halteelemente eine quer zur Längsrichtung der Schienenabschnitte verlaufende Anlagefläche als Widerlagerfläche für die Verbindungsmittel aufweisen, die Halteelemente Hülsen, geschlitzte Hülsen oder C-Nutprofilstücke sind und die Verbindungsmittel Schraubbolzen sind. In Abstimmung mit den jeweiligen Haltemitteln kommen eine Vielzahl von Verbindungsmitteln zur Verwendung in Frage. Die bevorzugten Schraubbolzen bieten eine einfache Montage und hohen Längshaltekräfte.

Die erfindungsgemäße Anordnung eignet sich insbesondere zur Verbindung von Schienenabschnitten einer Kranbahn- oder Trägerschiene von flurfreien Förderern. Insbesondere handelt es sich um Stoßverbindungen bei den Schienenabschnitten.

Weitere Einzelheiten, Merkmale und Vorteile der Erfindung ergeben sich aus der nachfolgenden Beschreibung eines Ausführungsbeispiels anhand der Zeichnung. Es zeigen:
Fig. 1 eine perspektivische schematische Ansicht eines Einträgerhängekrans;
Fig. 2 eine perspektivische schematische Ansicht zweier Schienenabschnitte und
Fig. 3 eine vergrößerte Seitenansicht des Ausschnitts A aus Figur 2.

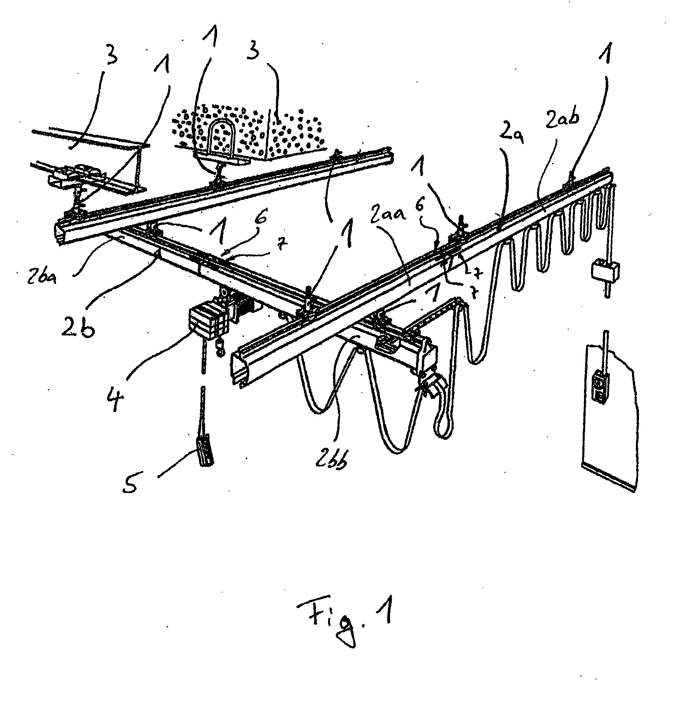

Zur Veranschaulichung der unterschiedlichsten Verwendungsmöglichkeiten von verbundenen Schienenabschnitten zur Ausbildung von Schienen ist in der Figur 1 ein Einträgerhängekran gezeigt.

Mittels Aufhängevorrichtungen 1 sind im Wesentlichen horizontal verlaufende und nach unten offene c-förmig profilierte Schienen 2 an Tragelementen 3 oder weiteren Schienen 2 aufgehängt. Die Tragelemente 3 sind als Doppel-T-Träger ausgebildet. Da das vorliegende Ausführungsbeispiel einen Einträgerhängekran betrifft, sind zwei im Wesentlichen horizontal, parallel und mit Abstand zueinander verlaufende erste Schienen 2a vorgesehen, die als Fahrschienen des Einträgerhängekrans dienen, und eine zweite Schiene 2b, die eine Kranschiene bildet, die im Wesentlichen quer zu den ersten Schienen 2a ausgerichtet und entlang der ersten Schienen 2a verfahrbar ist. Hierzu ist die zweite Schiene 2b über zwei Aufhängevorrichtungen 1 jeweils an einem nicht dargestellten und entlang der ersten Schienen 2a verfahrbarem Fahrwerk aufgehängt. An der zweiten Schiene 2b ist in üblicher Weise ein Hebezeug 4 wie ein Ketten- oder Seilzug aufgehängt und mit einem weiteren nicht dargestellten Fahrwerk entlang der zweiten Schiene 2b verfahrbar. Das Hebezeug 4 ist über einen an dem Hebezeug 4 aufgehängten Hängeschalter 5 steuerbar.

Die Schienen 2a, 2b können also wahlweise als Kranbahn- oder Trägerschienen von flurfreien Förderern verwendet werden.

Die Schienen 2a und 2b bestehen jeweils je nach Längenanforderung aus zwei oder mehreren Schienenabschnitten 2aa und 2ab bzw. 2ba und 2bb.

Die Schienenabschnitte 2aa und 2ab bzw. 2ba und 2bb sind über stirnseitige Stoßverbindungen 6 miteinander verbunden.

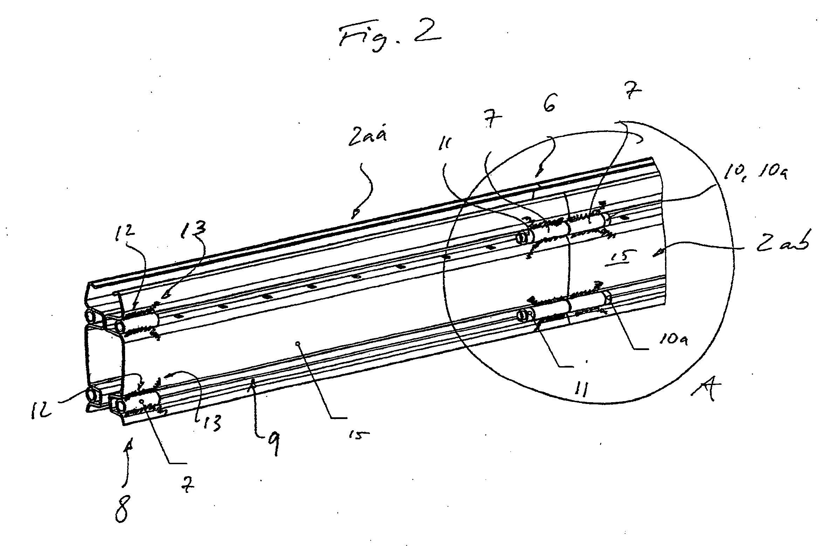

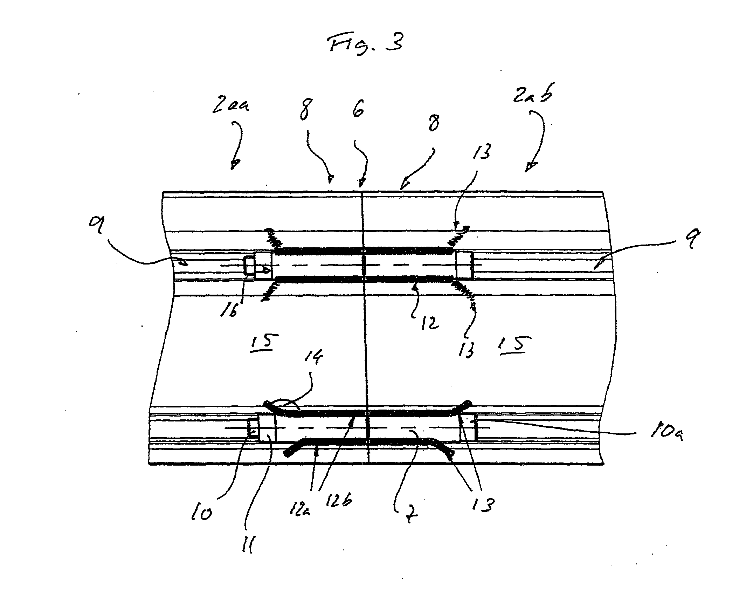

Nach folgend wird beispielhaft lediglich die Stoßverbindung 6 der Schienenabschnitte 2aa und 2ab anhand von Figuren 2 und 3 erläutert, da diejenige der Schienenabschnitte 2ba und 2bb entsprechend ausgebildet ist. Das Profil der Schienenabschnitte der Figuren 2 und 3 ist dabei lediglich demjenigen der Figur 1 ähnlich, aber nicht identisch.

Zur Ausbildung der Stoßverbindungen 6 der Schienenabschnitte 2aa und 2ab weisen die Schienenabschnitte 2aa und 2ab jeweils an ihren Außenseiten als Hülsen 7 ausgebildete Haltelemente auf, die an den Schienenabschnittenden 8 in längs verlaufenden Winkelräumen bzw. Nuten 9 der Schienenabschnitte 2aa und 2ab angeordnet sind.

Im dargestellten Beispiel werden vier Hülsen 7 pro Schienenabschnitt verwendet, die jeweils in entsprechenden Längsnuten 9 angeordnet sind. Dabei sind pro Schienenabschnittlängsseite je zwei Hülsen 7 vorgesehen.

Die Hülsen 7 werden von Schraubbolzen 10 als Verbindungselemente durchgriffen und bilden für deren Köpfe 10a bzw. deren Muttern 11 eine quer zur Längsrichtung der Schienenabschnitte verlaufende Anlagefläche 16 als Widerlagerfläche aus. Beim Einsatz von Schraubbolzen 10 ist es wichtig, wenn die entsprechende Mutter 11 verdreh gesichert ist. Dies kann vorzugsweise durch eine tropfenförmige oder konisch in Längsrichtung des Schraubenbolzens 10 zulaufende Ausgestaltung der Mutter 11 erreicht werden, so dass diese beim Anziehen in die Hülse 7 eingepresst wird.

Die Hülsen 7 sind an den Schienenabschnitten 2aa und 2ab jeweils durch eine in Längsrichtung des Schienenabschnitts 2aa und 2ab verlaufende Schweißnaht 12 auf jeder der beiden Längsseiten der Hülsen 7 befestigt. Die Schweißnähte 12 müssen sich dabei nicht über die gesamte Länge der Hülsen 7 erstrecken und können von einander unterschiedlich ausgebildet sein, wie sich durch Vergleich der Schweißnaht 12a mit der Schweißnaht 12b zeigt. Die Schweißnähte 12 sind entsprechend ihrer Funktion in einer Schweißfuge zwischen dem Halteelement 7 und dem jeweiligen Schienenabschnitt 2aa, 2ab. 2ba, 2bb angeordnet.

Das von der Stirnseite abgewandte Ende 13 der Schweißnaht 12 tritt aus der Schweißfuge heraus und befindet sich somit außerhalb des Halteelements 7. Hierbei steht das Ende 13 der Schweißnaht 12 also nicht mehr in Kontakt mit dem. Halteelement 7. Zusätzlich weicht die Ausrichtung des Endes 13 dabei von der Längsrichtung der Schweißnaht 12 entlang des Halteelements 7 ab. Dabei ist in einer Ausführungsform das Ende 13 linear und zu der restlichen Schweißnaht 12 einen Winkel 14 aus. Dieser Winkel 14 beträgt 15 - 45 Grad, vorzugsweise 25 - 35, besonders bevorzugt 30 Grad. Das Ende erstreckt sich somit aus der Nut 9 heraus bis auf die Seitenfläche 15 des Schienenprofils der Schienenabschnitte 2aa, 2ab. 2ba, 2bb. 3. Die Länge des Endes 13 beträgt hierbei 10 bis 30 mm, vorzugsweise 15 bis 25 mm, besonders bevorzugt 20 mm.

Es ist auch möglich, das Ende 13 anstatt linear gebogen auszuführen. Wichtig ist hierbei, dass die Richtung zu Längsrichtung der übrigen Schweißnaht 12 geändert wird.

### Bezugszeichenliste

- 1: Aufhängevorrichtung
- 2: Schiene
- 2a, 2b: Schiene
- 3: Tragelement
- 4: Hebezeug
- 5: Hängeschalter
- 2aa, 2ab, 2ba, 2bb: Schienenabschnitt
- 6: Stoßverbindung
- 7: Hülse
- 8: Schienenabschnittende
- 9: Nut
- 10: Schraubbolzen
- 10a: Kopf des Schraubbolzens
- 11: Mutter
- 12: Schweißnaht
- 12a, 12b: Schweißnaht
- 13: Ende
- 14: Winkel
- 15: Seitenfläche
- 16: Anlagefläche

## Patentansprüche

1. Anordnung aus zwei Schienenabschnitten (2aa, 2ab; 2ba, 2bb), aus mindestens einem an jedem Schienenabschnitt (2aa, 2ab; 2ba, 2bb) angeordneten Halteelement (7) und aus mindestens einem mit den Halteelementen (7) in Kontakt stehenden Verbindungsmittel, über das die Schienenabschnitte (2aa, 2ab; 2ba, 2bb) stirnseitig miteinander verbindbar sind, wobei jedes Halteelement (7) über eine Schweißnaht (12) an dem jeweiligen Schienenabschnitt (2aa, 2ab; 2ba, 2bb) befestigt ist, **dadurch gekennzeichnet, dass** mindestens ein Ende (13) der Schweißnaht (12) in einem Bereich außerhalb des Halteelements (7) auf dem Schienenabschnitt (2aa, 2ab; 2ba, 2bb) endet.

2. Anordnung nach Anspruch 1, **dadurch gekennzeichnet, dass** die Schweißnaht (12) im Bereich des Halteelements (7) in Längsrichtung des Schienenabschnitts (2aa, 2ab; 2ba, 2bb) verläuft und das Ende (13) der Schweißnaht (12) von der Längsrichtung abweicht.

3. Anordnung nach Anspruch 1 oder 2, **dadurch gekennzeichnet, dass** die Länge des Endes (13) 10 bis 30 mm, vorzugsweise 15 bis 25 mm, besonders bevorzugt 20 mm beträgt.

4. Anordnung nach einem der Ansprüche 1 bis 3, **dadurch gekennzeichnet, dass** das Ende (13) von der Stirnseite des Halteelements (7) abgewandt ist.

5. Anordnung nach einem der Ansprüche 1 bis 4, **dadurch gekennzeichnet, dass** das Ende (13) linear ist und in einem Winkel (14) von der Längsrichtung des Schienenabschnitts (2aa, 2ab; 2ba, 2bb) abweicht und der Winkel (14) 15 - 45 Grad, vorzugsweise 25 - 35, besonders bevorzugt 30 Grad beträgt.

6. Anordnung nach einem der vorhergehenden Ansprüche, **dadurch gekennzeichnet, dass** jeweils eine in Längsrichtung des Schienenabschnitts (2aa, 2ab; 2ba, 2bb) verlaufende Schweißnaht (12a, 12b) auf jeder der beiden Längsseites des Halteelements (7) angeordnet ist.

7. Anordnung nach Anspruch 6, **dadurch gekennzeichnet, dass** die Schweißnähte (12a, 12b) unterschiedliche Längen, Winkel und Längen der Abweichung aufweisen.

8. Anordnung nach einem der Ansprüche 1 bis 7, **dadurch gekennzeichnet, dass** die Schienenabschnitte (2aa, 2ab; 2ba, 2bb) Hohlprofilschienen sind, die aus zwei symmetrisch zur vertikalen Längsmittelebene angeordneten Profilen zusammengesetzt sind und die Haltelemente (7) an den Außenseiten der Schienenabschnitte (2aa, 2ab; 2ba, 2bb) angeordnet sind.

9. Anordnung nach einem Ansprüche 1 bis 8, **dadurch gekennzeichnet, dass** die Halteelemente (7) in längs verlaufenden Winkelräumen bzw. Nuten (9) der Schienenabschnitte (2aa, 2ab; 2ba, 2bb) angeordnet sind.

10. Anordnung nach Anspruch 9, **dadurch gekennzeichnet, dass** das Ende (13) der Schweißnaht (12) sich aus dem Winkelraum bzw. Nut (9) bis auf ein flaches Profil (15) des Schienenabschnitts (2aa, 2ab; 2ba, 2bb) erstreckt.

11. Anordnung nach einem der Ansprüche 1 bis 10, **dadurch gekennzeichnet, dass** die Halteelemente (7) eine quer zur Längsrichtung der Schienenabschnitte (2aa, 2ab; 2ba, 2bb) verlaufende Anlagefläche (16) als Widerlagerfläche für die Verbindungsmittel aufweisen, die Halteelemente Hülsen (7), geschlitzte Hülsen oder C-Nutprofilstücke sind und die Verbindungsmittel Schraubbolzen (10) sind.

## Claims

1. Arrangement comprising two portions of rail (2aa, 2ab; 2ba, 2bb), comprising at least one retaining member (7) arranged on each portion of rail (2aa, 2ab; 2ba, 2bb), and comprising at least one connecting means, in contact with the retaining member (7), by means of which the portions of rail (2aa, 2ab; 2ba, 2bb) can be connected together at their end-faces, each retaining member (7) being fastened to the given portion of rail (2aa, 2ab; 2ba, 2bb) by means of a weld (12), **characterised in that** at least one end (13) of the weld (12) terminates on the portion of rail (2aa, 2ab; 2ba, 2bb) in a region clear of the retaining member (7).

2. Arrangement according to claim 1, **characterised in that**, the weld (12) extends in the longitudinal direction of the portion of rail (2aa, 2ab; 2ba, 2bb) in the region of the retaining member (7), and the end (13) of the weld (12) diverges from the longitudinal direction.

3. Arrangement according to claim 1 or 2, **characterised in that** the length of the end (13) is 10 to 30 mm, and preferably 15 to 25 mm and, as a particular preference, 20 mm.

4. Arrangement according to one of claims 1 to 3, **characterised in that** the end (13) is remote from the end-face of the retaining member (7).

5. Arrangement according to one of claims 1 to 4, **characterised in that** the end (13) is straight and diverges from the longitudinal direction of the portion of rail (2aa, 2ab; 2ba, 2bb) at an angle (14) and the angle (14) is 15 - 45 degrees, and preferably 25-35 degrees and, as a particular preference, 30 degrees.

6. Arrangement according to one of the preceding claims, **characterised in that** respective welds (12a, 12b) extending in the longitudinal direction of the portion of rail (2aa, 2ab; 2ba, 2bb) are arranged on each of the two longitudinal sides of the retaining member (7).

7. Arrangement according to claim 6, **characterised in that** the lengths, the angles and the lengths of the divergences of the welds (12a, 12b) and are different.

8. Arrangement according to one of claims 1 to 7, **characterised in that** the portions of rail (2aa, 2ab; 2ba, 2bb) are rails in the form of hollow profiles which are assembled from two profiles symmetrically arranged to the longitudinal centre plane and the retaining members (7) are arranged on the outer sides of the portions of rail (2aa, 2ab; 2ba, 2bb).

9. Arrangement according to one of claims 1 to 8, **characterised in that** the retaining members (7) are arranged in longitudinally extending angular chambers or grooves (9) in the portions of rail (2aa, 2ab; 2ba, 2bb).

10. Arrangement according to claim 9, **characterised in that** the end (13) of the weld (12) extends out of the angular chamber or groove (9) to a point on a flat part (15) of the profile of the portion of rail (2aa, 2ab; 2ba, 2bb).

11. Arrangement according to one of claims 1 or 10, **characterised in that** the retaining members (7) have a surface for contact (16) extending transversely to the longitudinal direction of the portions of rail (2aa, 2ab; 2ba, 2bb) to act as an abutment surface for the connecting means, the retaining members are sleeves (7), slotted sleeves or profiled pieces forming C-grooves, and the connecting means are stud bolts (10).

## Revendications

1. Dispositif constitué de deux portions de rail (2aa, 2ab ; 2ba, 2bb), d'au moins un élément de retenue (7) disposé au niveau de chaque portion de rail (2aa, 2ab ; 2ba, 2bb) et d'au moins un moyen de liaison qui est en contact avec les éléments de retenue (7) et à l'aide duquel les portions de rail (2aa, 2ab ; 2ba, 2bb) peuvent être reliées l'une à l'autre du côté frontal, chaque élément de retenue (7) étant fixé à la portion de rail respective (2aa, 2ab ; 2ba, 2bb) par un cordon de soudure (12), **caractérisé en ce qu'**au moins une extrémité (13) du cordon de soudure (12) se termine dans une région à l'extérieur de l'élément de retenue (7) sur la portion de rail (2aa, 2ab ; 2ba, 2bb).

2. Dispositif selon la revendication 1, **caractérisé en ce que** le cordon de soudure (12) s'étend dans la région de l'élément de retenue (7) dans la direction longitudinale de la portion de rail (2aa, 2ab ; 2ba, 2bb) et l'extrémité (13) du cordon de soudure (12) s'écarte de la direction longitudinale.

3. Dispositif selon la revendication 1 ou 2, **caractérisé en ce que** la longueur de l'extrémité (13) est de 10 à 30 mm, de préférence de 15 à 25 mm, de façon particulièrement préférée de 20 mm.

4. Dispositif selon l'une des revendications 1 à 3, **caractérisé en ce que** l'extrémité (13) est opposé au côté frontal de l'élément de retenue (7).

5. Dispositif selon l'une des revendications 1 à 4, **caractérisé en ce que** l'extrémité (13) est linéaire et s'écarte de la direction longitudinale de la portion de rail (2aa, 2ab ; 2ba, 2bb) en formant un angle (14) et l'angle (14) est de 15 à 45 degrés, de préférence 25 à 35 degrés, de façon particulièrement préférée de 30 degrés.

6. Dispositif selon l'une des revendications précédentes, **caractérisé en ce qu'**un cordon de soudure (12a, 12b), s'étendant dans la direction longitudinale de la portion de rail (2aa, 2ab ; 2ba, 2bb), est disposé sur chacun des deux côtés longitudinaux de l'élément de retenue (7).

7. Dispositif selon la revendication 6, **caractérisé en ce que** les cordons de soudure (12a, 12b) ont des longueurs, des angles et des longueurs d'écartement différents.

8. Dispositif selon l'une des revendications 1 à 7, **caractérisé en ce que** les portions de rail (2aa, 2ab ; 2ba, 2bb) sont des rails à profil creux qui sont constitués de deux profils disposés symétriquement au plan médian longitudinal vertical et les éléments de retenue (7) sont disposés sur les côtés extérieurs des portions de rail (2aa, 2ab ; 2ba, 2bb).

9. Dispositif selon l'une des revendications 1 à 8, **caractérisé en ce que** les éléments de retenue (7) sont disposés dans des espaces angulaires ou gorges (9), s'étendant longitudinalement, des portions de rail (2aa, 2ab ; 2ba, 2bb).

10. Dispositif selon la revendication 9, **caractérisé en ce que** l'extrémité (13) du cordon de soudure (12) s'étend de l'espace angulaire resp. de la gorge (9) jusqu'à un profilé plat (15) de la portion de rail (2aa, 2ab ; 2ba, 2bb).

11. Dispositif selon l'une des revendications 1 à 10, **caractérisé en ce que** les éléments de retenue (7) présentent une face de butée (16) qui s'étend transversalement à la direction longitudinale des portions de rail (2aa, 2ab ; 2ba, 2bb) et qui est conformée en face de contre-appui destinée aux moyens de liaison, **en ce que** les éléments de retenue sont des manchons (7), des manchons fendus ou des pièces profilées en forme de gorges en C et **en ce que** les moyens de liaison sont des boulons filetés (10).
